# EUROPÄISCHE PATENTSCHRIFT

(11) **EP 0 893 844 B1**
(45) Veröffentlichungstag und Bekanntmachung des Hinweises auf die Patenterteilung: **22.02.2006**
(21) Anmeldenummer: 98107661.5
(22) Anmeldetag: 28.04.1998
(51) Int. Cl.: H01R 24/00, H01R 13/62, H01R 13/52

(54) **Heizleiter-Verbindungssystem**
Heating conductor connection system
Système de connexion pour conducteur de chauffage

(30) Priorität: 23.06.1997 DE 19726418
(43) Veröffentlichungstag der Anmeldung: 27.01.1999
(73) Patentinhaber: Airbus Deutschland GmbH, 21129 Hamburg (DE)
(72) Erfinder: Kirma, Safa, Dipl.-Ing., 22880 Wedel (DE); Stöver, Heinz, Dipl.-Ing., 21684 Stade (DE); Pfeiff, Joachim, Dipl.-Ing., 21629 Neuwulmsdorf (DE); Erdmann, Wolfgang, Dipl.-Ing., 21614 Buxtehude (DE)
(74) Vertreter: Hansmann, Dierk

(56) Entgegenhaltungen:
- EP-A- 0 187 636
- DE-U- 1 893 605
- DE-U- 8 504 019
- FR-A- 2 683 419
- US-A- 3 657 513
- PATENT ABSTRACTS OF JAPAN vol. 1998, no. 14, 31. Dezember 1998 (1998-12-31) & JP 10 233247 A (SEIWA ELECTRIC MFG CO LTD), 2. September 1998 (1998-09-02)

## Beschreibung

Die Erfindung bezieht sich auf ein Heizleiter-Verbindungssystem für einem Flugzeug gemäß dem Oberbegriff des Anspruchs 1.

Es ist bekannt, daß miteinander verbundene Heizbänder, die an den Rohrleitungen eines Flugzeuges befestigt sind, zu deren Beheizung eingesetzt sind, um einen aktiven Frostschutz an den Rohrleitungen und Armaturen sowie dem Zubehör, in denen flüssige Produkte transportiert werden, zu gewährleisten. Sie bilden ein Heizleiter-Verbindungssystem, das vom elektrischen Bordnetz des Flugzeuges intern mit Energie vorsorgt wird. Die Verbindungstechnologie der Heizbänder berücksichtigt, das die anschlußseitigen Enden des einzelnen Heizband verschiedenen vorgelagerten Arbeitsgängen unterzogen werden, um die elektrischen Leitungsanschlüsse des Heizbandes zur Verbindung mit einem weiteren Heizband oder mit dem Bordnetz vorzubereiten. Dabei werden dem außen- und innenseitig abgemantelten Heizband die elektrischen Leitungen freigelegt, wobei das Heizelement entsprechend gekürzt wird. Der Isolation der Leitungen (Anschlußadern) wird nachfolgend Klebe-/Vergußmasse aufgetragen, wobei ein die Isolationen der Leitungen und die Klebe-/Vergußmasse vollständig umhüllender Schrumpfschlauch, der diesem Aufbau aufgeschoben wird, nach seiner Verklebung (mit diesem Aufbau) und nach Aushärtung der Klebe-/Vergußmasse den Übergang der Leitungen und das Heizelement am abgesetzten Ende des Innenmantels isoliert und abdichtet. Die Leitungen (ohne das dem Innenmantel aufliegende Schutzleiter-Geflecht) besitzen eine Länge, wonach sie die Funktion einer Verlängerungsleitung innerhalb des Heizleiter-Verbindungssystems ausüben. In einer nachgeordnete Maßnahme erfolgt die Auskämmung und Verdrillung des Schutzleiter-Geflechtes, wobei ein Stoßverbinder (Quetschverbinder) das verdrillte freie Ende des Schutzleiter-Geflechtes und eine zusätzliche Verlängerungsleitung, der beiden aufgequetscht wird, elektrisch verbindet. Die zusätzliche Verlängerungsleitung besitzt die Länge der elektrischen Leitungen des Heizbandes, wobei die freien Enden dieser abisolierten Leitungen mit einem Stiftkontakt verquetscht werden. Dem Übergangsbereich des Schutzleiter-Geflechtes wird an der Stelle des außen abgemantelten Heizbandes (oberhalb dem Schrumpfschlauch, der den elektrischen Leitungen aufgeschrumft wurde,) Klebe-Nergußmasse aufgetragen, wobei diesem Aufbau zusätzlich ein weiterer Schrumfschlauch aufgeschrumpft wird.

Der weitere Schrumpfschlauch isoliert am abgesetzten Ende des Außenmantels des Heizbandes nach seiner Verklebung (mit dem Aufbau) und Aushärtung der Klebe-/Vergußmasse den vorbeschriebenen Heizband-Anschluß. Dadurch wird erreicht, daß der vorbereitete Heizband-Anschluß die vorgeschriebenen Dichtigkeitsanforderungen im Flugzeugbau gewährleistet.

Die elektrische Verbindung der Heizbänder zueinander oder des Heizbandes mit der Bordleitung geschieht dann folgendermaßen, wonach die Stiftkontakte, die den freien Enden der elektrischen Leitungen und der (dem Schutzleiter-Geflecht angeschlossene) zusätzlichen Verlängerungsleitung angequetscht sind, separat in einen Durchgangsstecker eingesteckt werden. Danach werden über die Durchgangsstecker alle elektrischen Verbindungen der Heizbänder miteinander und des ihnen angeschlossenen Bordnetzes realisiert.

Der Heizband-Anschluß verfügt über eine unförmige Geometrie und besteht aus Klebe-Nergußmasse und mehreren Schrupfschläuchen. Dabei wird dem am Heizband-Anschluß vorbereiteten Aufbau manuell Klebe-/Vergußmasse aufgetragen, mit mehreren Schrumfschläuchen überzogen und anschließend jede Verklebung einzeln im Ofen getrocknet und ausgehärtet. Durch diese erreichte unförmige Geometrie besteht die Gefahr, daß sich keine gleichbleibende Qualität gewährleisten läßt und das Dichteverhalten bei extrem niedrigen Druckverhältnissen und Temperaturschwankungen beeinträchtigt wird. Außerdem besteht die Gefahr, daß der überzogene Schrumpfschlauch durch die (mit mehreren Absätzen erzielte) unförmige Geometrie eine Rißbildung verursachen kann. Dadurch entsteht eine Beeinträchtigung der Funktion des Heizband-Anschlußes und der Sicherheit des Heizbandes, wodurch die Versorgungszuverlässigkeit eines integrierten Heizteiter-Verbindungssystems gefährdet wird.

Weiterhin besitzt die vorgestellte Technologie den Nachteil, daß die elektrischen Leitungen des Heizbandes (ohne dem Schutzleiter-Geflecht) funktionell als Verlängerungsleitungen ausgelegt sind. Nur das Schutzleiter-Geflecht wird mittels Stoßverbinder mit einer zusätzlichen Verlängerungsleitung verbunden. Dabei müssen die Leitungen entsprechend abgelängt und abisoliert werden.

Diese Maßnahme erfordert einen erheblichen Arbeitsaufwand, wobei die Gefahr besteht, daß einige Litzen der Leiter beschädigt und deren Oberflächenschutz verletzt werden kann. Auch trägt das manuelle Auftragen der Klebe-/Vergußmasse auf die Leitungen und das nachträgliche Aufschieben der Schrumpfschläuche nicht zur Einschränkung des technologischen Aufwandes bei. Die Auftragung der Klebe-/Vergußmasse ist für das Verkleben der Schrumpfschläuche zur Gewährleistung der Dichtigkeit und zur Vermeidung der möglichen Kapillarwirkung unerläßlich. Ebenso wird durch die elektrische Verbindung: " Schutzleiter-Geflecht mit der zusätzlichen Verlängerungsleitung " mittels Stoßverbinder dessen Lage und Integration innerhalb des Heizband-Anschlusses nicht exakt definiert und eine vollständige (100 %-ige) Kapillarwirkung wegen eines Durchgangsloches im Stoßverbinder (Quetschverbinder) nicht vermieden. Das mehrfache Trocknen oder Aushärten wegen Verkleben der Schrumpfschläuche (technologisch bedingte Wärmebehandlung) trägt keinesfalls zur Einschränkung des technologischen Aufwandes bei. Außerdem muß das Heizelement und die zugehörigen elektrischen Leitungen mit einem Schrumpfschlauch verklebt und abgedichtet werden. Eine abschließende Wärmebehandlung für einen zusätzlichen äußeren Schrumpfschlauch, der die zusätzliche Dichtung und den äußerer mechanischen Schutz des vorbereiteten Heizband-Anschlusses realisiert, strapaziert die technologischen Aufwand zusätzlich der vorbeschriebenen qualitativen technischen Nachteile erheblich. Mit dem vorbeschriebenen Herstellungsaufwand lassen sich keine Heizband-Anschlüsse wirtschaftlich fertigen. Eine (Vor-)Fertigung der (zu installierenden) Heizbänder für ein Flugzeug läßt sich nach dem geschilderten Stand der Technik nicht wirtschaftlich umsetzen.

Ein weiteres Heiz Leiter-Verbindungssystem ist aus des FR-2683419 bekannt.

Demzufolge liegt der Erfindung die Aufgabe zugrunde, ein gattungsgemäßes Heizleiter-Verbindungssystem in einem Flugzeug derart zu gestalten, daß sich die technischen Bestandteile der ihm integrierten Heizleiter-Anordnungen durch verbessertes Dichtverhalten unter Eliminierung der Kapillarwirkung bei Vibrationen, Schock, Wärmewechsel und niedrigen Druckverhältnissen, denen sie umgebungsgemäß im inneren Umfeld eines Flugzeuges ausgesetzt sind, auszeichnen. Dabei soll das Heizleiter-Verbindungssystem sich für andere Einsatzbereiche zum Schutz gefährdeter Systeme (Frostschutz-und Produktbeheizung) beliebig erweitern lassen, wobei sowohl bei der Herstellung der einzelnen Heizleiter-Anordnung lösbare als auch unlösbare Heizleiter-Verbindungen zu verwirklichen sind. Die Integration der Heizleiter-Anordnungen zu einem Heizleiter-Verbindungssystem soll unkompliziert geschehen, wobei die einzelne Heizleiter-Anordnung sich wirtschaftlich herstellen und leicht montieren und dem Heizleiter-Verbindungssystem einfach austauschen lassen soll und wobei die Ausschußrate bei der Herstellung auf ein Minimum reduziert wird.

Diese Aufgabe wird durch die im Anspruch 1 angegebenen Maßnahmen gelöst. In den weiteren Unteransprüchen sind zweckmäßige Ausgestaltungen angegeben.

Die Erfindung ist in einem Ausführungsbeispiel anhand der Zeichnungen näher beschrieben. Es zeigen
- Fig. 1: das Heizleiter-Verbindungssystem mit zwei elektrisch kuppelbaren Heizleiter-Anordnungen;
- Fig. 2: das Heizleiter-Verbindungssystem mit mehreren elektrisch kuppelbaren Heizleiter-Anordnungen;
- Fig. 3: das einzelne Anschlußmodul einer Heizleiter-Anordnung mit einer unlösbar verbundenen Heizbandleitung und Verlängerungsleitung;
- Fig. 4: das einzelne Anschlußmodul einer Heizleiter-Anordnung mit einer unlösbar verbundenen Heizbandleitung und einer lösbar verbundenen Verlängerungsleitung;
- Fig. 5: das einzelne Anschlußmodul einer Heizleiter-Anordnung mit zwei unlösbar verbundenen Heizbandleitungen.

Das in einem Flugzeug eingesetzte Heizleiter-Verbindungssystem, das man zum Schutz gefährdeter Rohrleitungs-Verbindungssysteme installiert, wird dort zum (prophylaktischen) Frostschutz und zur Produktbeheizung, vorwiegend zur Beheizung der Frisch-und Abwassersysteme, genutzt. Es ist dermaßen konzipiert, wonach sich im Störungsfall auch einzelne Abschnitte des Heizleiter-Verbindungssystems problemlos und ohne größeren Aufwand ersetzen lassen.
Das Heizleiter-Verbindungssystems besteht allgemein aus mehreren Heizleiter-Anordnungen 1, 12, 14, 14n, die sich mittels Verlängerungsleitungen 3 über ein Kupplungselement 42 elektrisch kuppeln lassen und seriell verbunden eine Heizleiter-Kette ergeben. Alle Heizleiter-Anordnungen 1, 12, 14, 14n weisen einzelne Anschlußmodule 5 auf, die mit einem Heizband 2 verbunden sind. Dabei ist das betreffende Heizband 2 der einzelnen Heizleiter-Anordnung 1, 12, 14, 14n jeweils an der Rohrleitung des zu beheizenden Frisch- oder Abwassersystems befestigt. Die einzelne Heizleiter-Anordnung 1, 12, 14, 14n setzt sich aus mehreren Anschlußmodulen 5, die miteinander mit einem Heizband 2 verbunden sind, oder auch nur aus einem Anschlußmodul 5, dem ein Heizband angeschlossen ist, zusammen. Dieses (eine Heizleiter-Anordnung bildende) Anschlußmodul 5 ist dann am Ende der Heizleiter-Kette installiert.

Die (mit dem Heizband 2 verbundenen) Anschlußmodule 5, die den Ein- oder Ausgang der seriell zu verbindenden Heizleiter-Anordnung 1, 12, 14, 14n bilden, sind mit einer Verlängerungsleitung 3 beschaltet. Die elektrische Kupplung der Heizleiter-Anordnungen 1, 12, 14, 14n wird über ein Kupplungselement 42, mit dem die (ein- und ausgangsseitig dem betreffenden Anschlußmodul 5) angeschlossene Verlängerungsleitung 3 verbunden ist, realisiert.
Das einzelne Anschlußmodul 5 [einer am Ende der Heizleiter-Kette installierten (nicht dargestellten) Heizleiter-Anordnung] ist eingangsseitig mit einer (nicht dargestellten) letzten Verlängerungsleitung 3 verbunden, die mit einem ihr vorgeordneten letzten Kupplungselement 42 (der Heizbandkette) elektrisch gekuppelt ist. Das diesem Anschlußmodul 5 angeschlossene (und die Heizbandkette beendende) Heizband 2 wird am freien Ende mit einer Heizband-Endkappe versehen, die die elektrischen Leitungen des beendenden Heizbandes 2, die am Heizbandende nicht miteinander verbunden sind und die den Heizband-Stromkreis der seriell verbundenen Heizband-Anordnungen 1, 12, 14, 14n offen abschließen, zueinander elektrisch isoliert und, allseitig von einem als Klebe-/Vergußmasse eingesetzten Abdichtmittel 19 (nachfolgend nur die beispielbezogene Bezeichnung: " Klebe-/Vergußmasse 19 " angegeben) umgeben, vollständig gegen Feuchtigkeits- und Flüssigkeitseintritt bei extrem niedrigen Druckverhältnissen zur Gewährleistung der Dichtigkeitsanforderungen abdichtet.

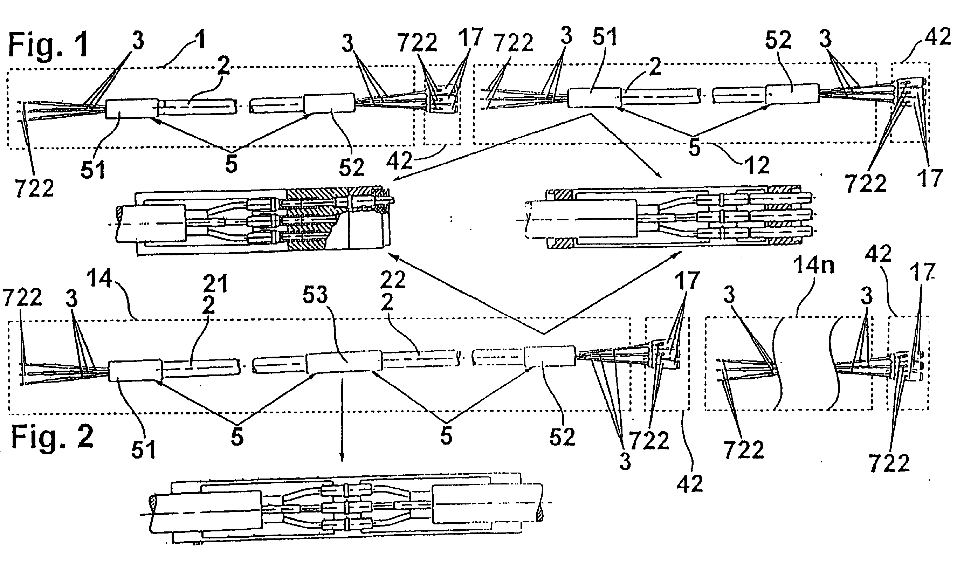

In der Fig. 1 ist das Heizleiter-Verbindungssystem mit zwei elektrisch gekuppelten Heizleiter-Anordnungen 1, 12 dargestellt, die miteinander in Serie geschalten sind. Beide Heizleiter-Anordnungen 1, 12 besitzen einen gleichen Aufbau. Sie bestehen aus einem ersten und einem zweiten Anschlußmodul 51, 52, die direkt mit einem Heizband 2 verbunden sind.
Beiden Anschlußmodulen 51, 52 ist jeweils (ein- oder ausgangsseitig der betreffenden Heizleiter-Anordnung 1, 12) eine Verlängerungsleitung 3 angeschlossen. Die Verlängerungsleitung 3 weist drei flexibele einpolige elektrische Leitungen auf, an deren abisolierten freien Ende jeweils ein Stiftkontakt 722 angequetscht ist. Dabei wird der Stiftkontakt 722 der einzelnen Leitung (der Verlängerungsleitung 3) dem betreffenden Durchgangsstecker 17 des Kupplungselementes 42, das drei einzelne elektrische Durchgangsstecker 17 integriert, eingesetzt.

Dadurch, das die dem zweiten Anschlußmodul 52 der ersten Heizleiter-Anordnung 1 angeschlossenen Leitungen der Verlängerungsleitung 3 jeweils mit denjenigen Leitungen des ersten Anschlußmoduls 51 der zweiten Heizleiter-Anordnung 12 über die beiderseitigen Stiftkontaktverbindungen mit dem einzelnen Ourchgangsstecker 17 verbunden sind, wird die elektrische Kupplung der beiden Heizleiter-Anordnungen 1, 12 vollzogen.

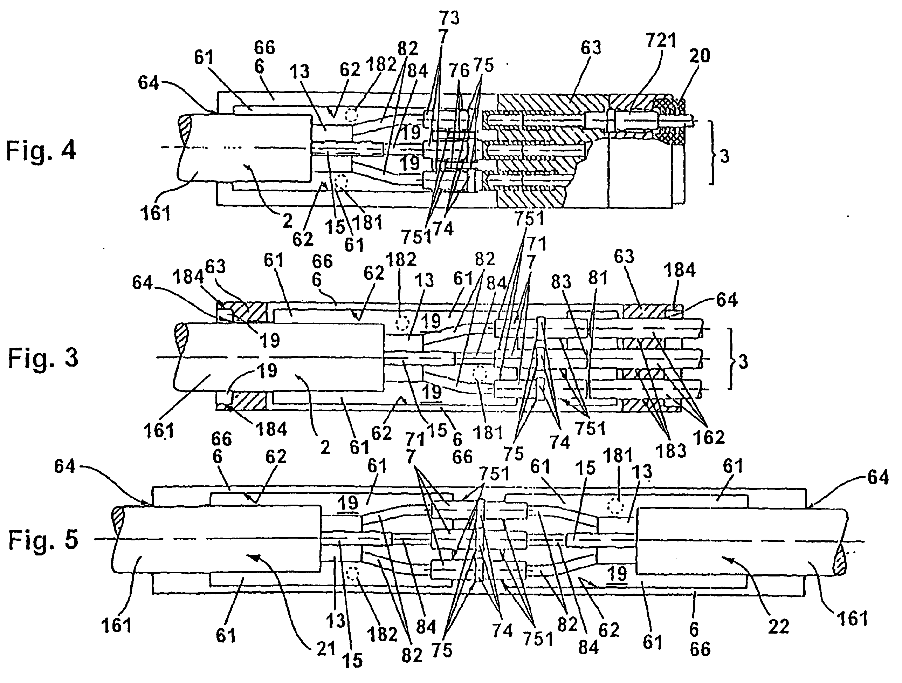

Die Anschlußmodule 51, 52 der einzelnen Heizleiter-Anordnung 1, 12 nach der Fig. 1 besitzen einen (später erläuterten) Aufbau, der in den Figuren 3 und 4 eingehender dargestellt ist. Danach läßt sich das erste und zweite Anschlußmodul 51, 52 mit einer Anordnung nach den Figuren 3 oder 4 realisieren, sofern es sich um zwei mit einem Heizband 2 verbundene Anschlußmodule 51, 52 nach der Fig. 1 handelt.

In der Fig. 2 ist die elektrische Kupplung einer aus drei Anschlußmodulen 51, 52, 53 bestehenden und mit zwei Heizbändern 21, 22 verbundenen dritten Heizleiter-Anordnung 14 mit einer n-ten Heizleiter-Anordnung 14n angedeutet.
Der Aufbau der n-ten Heizleiter-Anordnung 14n wird offen dargestellt, weil sich dafür sowohl Anschlußmodule nach den Figuren 3 und 4 und auch der (später beschriebenen) Fig. 5 eignen. Die Bezeichnung: n-te Heizleiter-Anordnung 14n wird deshalb gewählt, um anzudeuten, daß sich die Heizleiter-Kette aus mehreren in Serie geschaltete Heizleiter-Anordnungen 1, 12, 14 bis zur n-ten Heizleiter-Anordnung 14n bilden läßt. Im Unterschied der Darstellung nach Fig. 1 ist zwischen zwei Anschlußmodulen 5, dem ersten und dem zweiten Anschlußmodul 51, 52, ein drittes Anschlußmodul 53 geschalten. Dabei sind dem dritten Anschlußmodul 53 zwei Heizbänder 2, ein erstes und ein zweites Heizband 21, 22, fest angeschlossen, wobei das erste Anschlußmodul 51 mit dem ersten Heizband 21 und das zweite Anschlußmodul 52 mit dem zweiten Heizband 22 unlösbar verbunden ist. Der Anschluß der Verlängerungsleitung 3 an das betreffende ein- und ausgangsseitig der dritten Heizleiter-Anordnung 14 gelegene erste und zweite Anschlußmodul 51, 52 sowie die elektrische Kupplung mit einer seriell vor- oder nachgeordneten Heizleiter-Anordnung (beispielsweise mit der n-ten Heizleiter-Anordnung 14n) erfolgt gemäß der nach der Fig. 1 vorbeschriebenen Art.

Diese Ausführungsform einer derartigen Heizleiter-Anordnung 14 wäre besonders im Reparaturfall für ein elektrisch gestörtes Heizband 2 (Kurzschlußfall) oder ein mechanisch verletztes Heizband 2 interessant, weil dann die auf der (installierten) Heizbandlänge lokalisierte Störung durch Trennung bspw. des Heizbandes 2 an der Störungsstelle und Verbindung der (an der Trennstelle) erhaltenen freien Heizbandenden [des (durch die Trennung) bekommenen ersten und zweiten Heizbandes 21, 22] mit dem Anschlußmodul 53 beseitigt (aufgehoben) werden kann.

Bei allen Ausführungen nach den Figuren 3 bis 5 besitzt das Anschlußmodul 5, 51, 52, 53 ein elektrisches Anschlußgehäuse 6, das mit Bestandteil eines jeden Anschlußmoduls 5, 51, 52, 53 ist und sich aus einem offenen Gehäuseunterteil 66 und einem (nicht dargestellten) Gehäusedeckel zusammengesetzt. Das Gehäuseunterteil 66 und der Gehäusedeckel, der dem Gehäuseunterteil 66 nach der Realisierung der elektrischen Verbindungen (bezüglich des Heizbandes 2, 21, 22 und / oder der Verlängerungsleitung 3 innerhalb seines offenen Bereiches) auflegt, werden miteinander kraft- und / oder formschlüssig verbunden. Die Körperverbindung beider Gehäuseteile, die aus einem (nichtleitenden) Kunststoff bestehen, kann durch Kunststoff-HF-Verschweißung, beispielsweise durch Ultraschall, geschehen, wobei eine mechanische dichte Umklammerung der Gehäuseteile oder ein mechanisches dichtes Aufliegen der Gehäuse-Deckelwandung auf der (freiliegenden) Gehäusewandung des Gehäuseunterteiles 66 durch eine Schraubbefestigung der beiden Gehäuseteile ebenfalls denkbar wäre. Das Anschlußgehäuse 6 besitzt im befestigten Endzustand der beiden Gehäuseteile eine quaderförmige Form, wobei dem Gehäuseunterteil 66 beiderseitig der Stirnseiten (entsprechend der Anzahl der ein- und ausgangsseitig einzuführenden Leitungen) wenigstens eine Gehäuseeinführung 64 [zum Einführen des Heizbandes 2, 21, 22 oder der Verlängerungsleitung(en) 31 hat.
Innerhalb des offenen Gehäuseunterteiles 66 des betreffenden Anschlußmoduls 5, 51, 52, 53 ist ein einzelnes elektrische Verbindungselement 7 oder sind mehrere elektrische Verbindungselemente 7 positioniert, das (die) als Quetschelement ausgebildet ist (sind) und deren unmittelbarer Verbindungsbereich mit den elektrischen Leitungen des Heizbandes 2 oder der Verlängerungsleitung 3 als Quetschbereich ausgeführt ist. Die Anzahl der Verbindungselemente 7 geschieht in Abhängigkeit der Anzahl der zu verbindenden elektrischen Leitungen.

Die als Stoßverbinder 71 (Quetschverbinder) ausgebildeten Verbindungselemente 7 sind im Innenraum 61 in eigens der Gehäuseinnenwandung 62 ausgenommenen (Längs- und Quer-)Nuten angeordnet. Da das Anschlußgehäuse 6 anderenfalls auch stirnwandinnenseitig wenigstens einen massiven Gehäuseendbereich 63 mit in seiner Längsachse angeordneten Kontaktkammern aufweisen kann, nimmt dann (bei dieser Anordnung) die einzelne Kontaktkammer einen als Buchsen- und / oder eines Stiftkontaktes 73, 721 ausgebildetes Verbindungselementes 7 auf.

Bei dieser Ausführung befindet sich der Quetschbereich des Buchsenkontaktes 73 entweder im Innenraum 66 des Anschlußgehäuses 6 oder er ragt zumindestens dorthin hinein, wobei der Kontakt selbst mit einem Haltering 76 (clip) verriegelt ist. Der Stiftkontakt 721 wird in den Kontaktkammern des massiven Gehäuseendbereiches 63 aufgenommen und mit einem separaten Haltering 76 verriegelt, wobei bei der Ausführung nach Fig. 3 die (elektrischen Leitungen der) Verlängerungsleitung 3 in einer Bohrung des massiven Gehäuseendbereiches 63 geführt sind. Die elektrische Verbindung der betreffenden elektrischen Leitungen (Adern) mit den Verbindungselementen 7 geschieht durch Einführen der abisolierten Leitungsenden in den endseitigen Quetschbereich (der Verbindungselemente 7) und Quetschung des Quetschbereiches auf die Leitungsenden mit einem geeigneten Werkzeug.

Das einzelne (innerhalb des offenen Gehäuseunterteiles 66 fest positionierte) Verbindungselement 7, dem bereits die einzelne elektrische Leitung des Heizbandes 2 anschlossen ist, oder wenigstens der Verbindungsbereich des Verbindungselementes 7 (mit der ihm angeschlossenen elektrischen Leitung) ist allseitig von einer Klebe-Nergußmasse 19 umgeben. Davon sind gleichfalls die in einer Aufnahmenut 751 (Längsnut) angeordneten Stoßverbinder 71 (nach den Figuren 3 und 5) betroffen, die zumindestens teilweise von Klebe-/Vergußmasse 19 umgeben sind. Außerdem ist (innerhalb des offenen Gehäuseunterteiles 66) der abgesetzte Bereich des Heizbandes 2, 21, 22 sowie der hineinragende Teil des Außenmantels 161 des Heizbandes 2, 21, 22 und auch (im Einzelfall nach Fig. 5) der abgesetzte Bereich der (elektrischen Leitungen der) Verlängerungsleitung 3 allseitig von Klebe-Nergußmasse 19 umgeben und vollständig gegen Feuchtigkeits- und Flüssigkeitseintritt bei extrem niedrigen Druckverhältnissen zur Gewährleistung der Dichtigkeitsanforderungen abgedichtet.

Weiterhin ist der Innenraum 61 des Anschlußgehäuses 6 [im Endzustand der körperverbundenen Gehäuseteile (Gehäusedeckel mit Gehäuseunterteil 66) und im abgeschlossenen Stadium der vorgenannten elektrischen Verbindungen] allseitig mit Klebe-Nergußmasse 19 gefüllt. Die Benutzung einer in das Gehäuseunterteil 66 eingelassenen durchgehende Füllbohrung 181 wäre eine alternative Ausführung zum Einfüllen der Klebe-Nergußmasse 19 und zum Ausfüllen des Innenraumes 61 mit Klebe-/Vergußmasse 19.

Der andauernde Austritt der Klebe-/Vergußmasse 19 aus einer in das Gehäuseunterteil 66 eingelassene durchgehende Entlüftungsbohrung 182 (während der Befüllung) signalisiert, daß der Innenraum 61 des Anschlußgehäuses 6 und die Verbindungselemente 7 allseitig von Klebe-Nergußmasse 19 umgeben sind und damit durch die Klebe-Nergußmasse 19 keine Luftanteile eingeschlossen werden.

Es wird erwähnt, das die vorgenannte(n) Gehäuseeinführung(en) 64 im Einzelfall (nach der Fig. 3) zusätzlich mit Aussparungen 184 versehen sind, welche sich außerhalb des Innenraumes 61 des Anschlußgehäuses 6 befinden, die dem massiven Gehäuseendbereich 63 an den Stirnflächen des Anschlußgehäuses 6 wenigstens teilweise ausgenommen sind. Diese Aussparungen 184 sind im Endzustand ebenso mit der Klebe-/Vergußmasse 19 allseitig ausgefüllt, damit die Gehäuseeinführung 64 des Anschlußgehäuses 6 dort auch vollständig gegen Feuchtigkeits- und Flüssigkeitseintritt geschützt ist.

Die Installation des vorgenannten Heizbandes 2, 21, 22, das die Anschlußmodule 5, 51, 52, 53 miteinander verbindet, läßt sich mit einem Widerstands- oder Parallelheizband ausführen, das als Ein- oder Mehrader-Heizband ausgebildet ist. Dabei handelt es sich um ein Flach- oder Rundheizband, das mit verschiedenen Querschnitten ausgeführt ist.
Die Installation des Heizbandes 2, 21, 22 (nach den Figuren 3 bis 5) läßt sich mit einem selbstlimitierenden Heizband 2, 21, 22 für verschiedene Temperaturbereiche realisieren. Es handelt sich dabei (entsprechend dem Einsatzfall) um ein Hoch- oder Niedertemperatur-Heizband.

In der Fig. 3 wird das einzelne Anschlußmodul 5, 51, 52 mit einem Heizband 2 und einer Verlängerungsleitung 3, die mit ihm unlösbar verbunden sind, dargestellt. Dabei handelt es sich beispielsweise um das zweite Anschlußmodul 52 der ersten Heizleiter-Anordnung 1 nach der Fig. 1, das sich über die ihm angeschlossene Verlängerungsleitung 3 mit dem Kupplungselement 42 nach Fig. 1 verbinden läßt.

Letzteres kann beispielsweise mit der (nicht gezeigten) elektrischen Bordnetz-Leitung des Flugzeuges oder mit der dem ersten Anschlußmodul 51 der zweiten Heizleiter-Anordnung 12 angeschlossenen Verlängerungsleitung 3 nach Fig. 1 verbunden sein, infolge dessen dann die elektrische Kupplung des zweiten Anschlußmoduls 52 der ersten Heizleiter-Anordnung 1 mit dem elektrischen Bordnetz des Flugzeuges oder die elektrische Kupplung des zweiten Anschlußmoduls 52 der ersten Heizleiter-Anordnung 1 mit dem ersten Anschlußmodul 51 der zweiten Heizleiter-Anordnung 12 realisiert wäre.

Bei dieser Ausführungsform wird ein als selbstlimitierendes Parallelheizband bekanntes Heizband 2, 21, 22 eingesetzt, das gleichermaßen auch bei den Ausführungsformen nach den Figuren 4 und 5 angewendet wird.
Der Aufbau des Heizbandes 2, 21, 22 ist derart, wonach die beiden paralleiverlaufenden betriebsmäßig stromführende Leitungen 82 (Anschlußadern: Kupferlitze, verzinnt) des Heizbandes 2, 21, 22, die vollständig einem (nicht gezeigten) selbstregulierenden Kunststoff-Heizelement eingebettet sind, ein Innenmantel 13 (eine äußere Kunststoff-Isolation) umhüllt, den eine betriebsmäßig nicht stromführende Leitung 84 (Schutzleiter: Kupfergeflecht, verzinnt) geflecht- und schlauchartig umgibt. Oberhalb diesem Schutzleiter-Geflecht bildet ein Außenmantel 161 (Schutzmantel aus Kunststoff) den Abschluß des Heizband-Aufbaus, der das Schutzleiter-Geflecht vollständig umhüllt.

Das Anschlußmodul 5, 51, 52 nach Fig. 3 besteht aus dem erwähnten quaderförmigen Anschlußgehäuse 6, dessen Gehäuseunterteil 66 zwei massive Gehäuseendbereiche 63 besitzt, die sich stirnseitig gegenüberstehen. Die dem Innenraum 61 des Anschlußmoduls 5, 51, 52 zugewandten Gehäuseendbereiche 63 sind stirnwandseitig dem stirnseitigen Bereich der Wandung des Anschlußgehäuses 6 angeformt, wobei die Gehäuseinnenwandung 62 des Gehäuseunterteiles 66 den offenen Bereich des Innenraumes 61 einschließt. Dem Gehäuseunterteil 66 sind beiderseits der äußeren Stirnflächen der Gehäuseendbereiche 63 verschiedenartige Gehäuseeinführungen 64 ausgenommen, die den betreffenden Gehäuseendbereich 63 und die mit ihm verbundene Wandung in Richtung der Gehäuselängsachse durchdringen. Dabei wird durch eine Gehäuseeinführung 64 das Heizband 2 in den Innenraum 61 des Gehäuseunterteiles 66 geführt.

Dem stirnseitig gegenüberliegende Gehäuseendbereich 63 sind in Richtung der Gehäuselängsachse drei Führungsbohrungen 183, die den Bereich der Gehäuseeinführung 64 darstellen, ausgenommen, welche auch die mit ihm verbundene Wandung in Richtung der Gehäuselängsachse durchdringen. Durch diese Führungsbohrungen 183 wird die aus drei flexibelen elektrischen Leitungen integrierte Verlängerungsleitung 3 geführt, wobei die Leitungen einzeln der betreffenden Führungsbohrung 183 zugeordnet sind. Im Innenraum 61 des Gehäuseunterteiles 66 befinden sich drei als Verbindungselemente 7 eingesetzte Stoßverbinder 71, die als Quetschverbinder ausgebildet sind.

Die (endseitigen) Quetschbereiche der Stoßverbinder 71 befinden sich an deren freien Enden, wobei die Stoßverbinder 71 in Richtung der Gehäuselängsachse zueinander beabstandet angeordnet liegen. Jeder Stoßverbinder 71 besitzt mittig seiner Körperlängsachse einen Bund 74, wobei die endseitigen Quetschbereiche separat in einer Aufnahmenut 751, die der Gehäuseinnenwandung 62 ausgenommen ist, angeordnet und geführt sind. Die Aufnahmenut 751 ist danach als Längsnut ausgebildet, die dem Verlauf der Längsachse des Anschlußgehäuses (6) entspricht und die die endseitigen Quetschbereiche des Quetschelementes 7 separat aufnimmt. Die einzelnen Stoßverbinder 71 sind zusätzlich durch eine Quernut (75) um den Bund 74 fixiert, wobei auch die Quernut 75 innerhalb des Anschlußgehäuses 6 der Gehäuseinnenwandung 62 eingelassen ist.

Es wird ergänzt, daß (in Richtung der Gehäuselängsachse betrachtet) die Lage der Querschnitte der drei Stoßverbinder 71 mit denen der drei Führungsbohrungen 183 übereinstimmt. Wie vorher erwähnt, sind bei dieser Ausführung (nach Fig. 3) die Gehäuseeinführungen 64 zusätzlich mit Aussparungen 184 versehen, die im montierten Endzustand des Anschlüßmodules 5, 51, 52 zu dem eingangs beschriebenen Zweck eben mit Klebe-/Vergußmasse 19 ausgefüllt sind.
Der nicht abgesetzte Bereich des Heizbandes 2 wird nach einer an sich bekannten Technologie entmantelt, derweise, daß die elektrischen Leitungen des Heizbandes 2 freigelegt werden. Dabei wird der das Heizband 2, das beispielgemäß ein selbstlimitierendes Parallelheizband ist, außenseitig umhüllende Außenmantel 161 entfernt (abgesetzt) und die als Schutzleitergeflecht ausgeführte betriebsmäßig nicht stromführende Leitung 84 freigelegt.

Danach werden die unterhalb dem Innenmantel 13 befindlichen betriebsmäßig stromführenden Leitungen 82 durch Entfernung des Innenmantels 13, oberhalb dem das Schutzleiter-Geflecht liegt, freigelegt und außerdem das Heizelement entsprechend gekürzt. Dann (oder bereits nach der Freilegung) wird das Schutzleiter-Geflecht ausgekämmt und verdrillt, dermaßen, daß sich das verdrillte Ende problemlos mit dem endseitigen Quetschbereich eines der Stoßverbinder 71 verbinden läßt. Ein dem Schutzleiter-Geflecht aufgeschrumpfter Schrumpfschlauch 15, der (zu Teilen) oberhalb dem Innenmantel 13 aufliegt, dichtet und isoliert elektrisch diesen mit Kteb-/Vergußmasse 19 vorbehandelten Teil des Übergangsbereiches zusätzlich ab.

Somit befindet sich der (sogenannte) abgesetzte Bereich des Heizbandes 2 im offenen Innenraum 61 des Anschlußgehäuses 6, wobei die abisolierte(n) (elektrischen Leitungen der) Verlängerungsleitung 3 und die seitlich angeordneten Anschlußenden der beiden betriebsmäßig stromführenden Leitungen 82 und des mittig angeordneten betriebsmäßig nicht stromführenden Leiters 84 des eingeführten selbstlimitierenden Heizbandes 2 mit dem in den Innenraum 61 ragenden Quetschbereich der dort angeordneten drei Stoßverbinder 71 vor der Einführung separat verquetscht wird.

Die flexibelen elektrischen Leitungen der Verlängerungsleitung 3, die den Führungsbohrungen 183, welche dem stirnseitig gegenüberliegenden Gehäuseendbereiches 63 ausgenommen sind, hindurchgeführt sind, werden dem (momentan nicht belegten) endseitigen Quetschbereich des betreffenden Stoßverbinders verquetscht; und an den (momentan nicht belegten) freien Enden der (elektrischen Leitungen der) Verlängerungsleitung 3 mit den Stiftkontakten 722 verquetscht. Dabei befinden sich deren Anschlußenden (die Anschlußenden der beiden betriebsmäßig stromführenden Leitungen 81 und der betriebsmäßig nicht stromführende Leitung 83 der Verlängerungsleitung 3) im abisolierten Zustand. Bei den Quetschverbindungen handelt es sich um unlösbare elektrische Verbindungen der elektrischen Leitungen des Heizbandes 2 und der Verlängerungsleitung 3, die derart dem betreffenden Stoßverbinder 71 angeschlossen sind.

Weiterhin wird die Installation des Heizbandes 2 und der Verlängerungsleitung 3 derart ausgeführt, wonach die in den gehäuse (unterteil) seitig eingelassenen Nuten fixierten einzelnen Stoßverbinder 71, wenigstens deren Verbindungsbereich (mit den ihnen angeschlossenen elektrischen Leitungen), von der Klebe-/Vergußmasse 19 umgeben sind, derart, daß die dort separat aufgetragene Klebe-/Vergußmasse 19 diesen Bereich der Installation allseitig abdichtet und damit vollständig gegen Feuchtigkeits- und Flüssigkeitseintritt bei extrem niedrigen Druckverhältnissen zur Gewährleistung der Dichtigkeitsanforderungen, denen das Anschlußmodul 5, 51, 52 bzw. die einzelnen (Installations-)Abschnitte des Anschlußgehäuses 6 unterliegen, abgedichtet ist.

Nach Abschluß der vorbeschriebenen Installation wird dem Gehäuseunterteil 66 der Gehäusedeckel aufgelegt, so daß der offene Innenraum 61 des Gehäuseunterteiles 66 bedeckt ist. Danach werden der Gehäusedeckel und das Gehäuseunterteil 66 miteinander kraftschlüssig verbunden. Es besteht die Möglichkeit, beide aus einem Kunststoff bestehenden Gehäuseelemente durch Verschweißen der Auflagebereiche miteinander zu verbinden. Eine andere Möglichkeit besteht durch Verschraubung (Schraubbefestigung: durch die Deckelwandung eingelassene Schrauben, die mit dem Gewinde, das dem Boden des Gehäuseunterteiles 66 eingearbeitet ist, verschraubt sind) des Gehäusedeckels auf dem Gehäuseunterteil 66. Ebenfalls wäre eine Klammerbefestigung der beiden Gehäuseelemente denkbar, wobei die Klammer(n) den Gehäusedeckel und das Gehäuseunterteil 66 von außen umklammern.

Mit den beiden zuletzt genannten Möglichkeiten wird der Verbund beider Gehäuseelemente realisiert.

Danach wird der Innenraum 61 des deckelverschlossenen Gehäuseunterteiles 66 über die Füllbohrung 181, die beispielsweise an geeigneter Stelle dem Boden des Gehäuseunterteiles 66 eingelassen ist, (unter Druck) mit Klebe-/Vergußmasse 19 befüllt. Der Vorgang wird erst abgebrochen, wenn diese Klebe-/Vergußmasse 19 der (sogenannten) Entlüftungsbohrung 182, die beispielsweise auch an geeigneter Stelle dem Boden des Gehäuseunterteiles 66 eingelassen ist, (nach verstrichenem Zeitraum) austritt.

In diesem Endstadium ist der Innenraum 61 und sind einschließlich die (mit Klebe-Nergußmasse 19) vorbehandelten Stoßverbinder 71 sowie die Verbindungsstellen der ihnen angeschlossenen elektrischen Leitungen und als auch der abgesetzte Anschlußbereich sowie der hineinragende Außenmantel 161 des Heizbandes 2 als auch die (elektrischen Leitungen der) Verlängerungsleitung 3 bis an die Gehäuseinnenwandung 62 allseitig von Klebe-/Vergußmasse 19 umgeben.

Gleichfalls dringt die Klebe-/Vergußmasse 19 bis an den stirnseitigen Bereich des Gehäuseendbereiches 63, durch den die Verlängerungsleitung 3 eingeführt ist, vor. Die zusätzlich Ausfüllung der mit Ausparungenen 184 versehenen Gehäuseeinführungen 64 wurde bereits erwähnt. Nach dem Abschluß dieser Maßnahme ist das Anschlußgehäuse 6 innenseitig vollständig gegen Feuchtigkeits- und Flüssigkeitseintritt bei extrem niedrigen Druckverhältnissen, denen es (allgemein: das Anschlußmodul 5, 51, 52) möglicherweise ausgesetzt ist, zur Gewährleistung der Dichtigkeitsanforderungen abgedichtet.

Alternativ kann der Gehäusedeckel auf die ganze Länge des Anschlußmoduls 5 bezogen werden, wobei die Führungsbohrungen 183 für die (elektrischen Leitungen der) Verlängerungsleitung 3 durch offene Nuten ersetzt werden; und ebenso läßt sich der Bereich der Gehäuseeinführung 64, der dem massiven Gehäuseendbereich 63 ausgenommenen ist, durch eine offene Nut ersetzen.

Das in der Fig. 4 dargestellte Anschlußmodul 5, 51, 52 besitzt einen dem Anschlußmodul 5, 51, 52 nach Fig. 3 ähnlichen Aufbau, der durch die Wahl der Verbindungsart des Heizbandes 2 und der Verlängerungsleitung 3 mit dem Verbindungselement 7 im (offenen) Innenraum des Anschlußgehäuses 6 unterschiedlich ausfällt.

In der Fig. 4 wird das einzelne Anschlußmodul 5, 51, 52 mit einem ihm unlösbar verbundenen Heizband 2 und einer Verlängerungsleitung 3, die mit ihm von außen lösbar verbunden ist, dargestellt. Dabei handelt es sich beispielsweise um das erste Anschlußmodul 51 der zweiten Heizleiter-Anordnung 12 nach der Fig. 1, das sich über die ihm angeschlossene Verlängerungsleitung 3 mit dem Kupplungselement 42 nach Fig. 1 verbinden läßt. Letzteres kann beispielsweise mit der (nicht gezeigten) elektrischen Bordnetz-Leitung des Flugzeuges oder mit der dem zweiten Anschlußmodul 52 der ersten Heizleiter-Anordnung 1 angeschlossenen Verlängerungsleitung 3 nach Fig. 1 verbunden sein, infolge dessen dann die elektrische Kupplung des ersten Anschlußmoduls 51 der zweiten Heizleiter-Anordnung 12 mit dem elektrischen Bordnetz des Flugzeuges oder die elektrische Kupplung des ersten Anschlußmoduls 51 der zweiten Heizleiter-Anordnung 12 mit dem zweiten Anschlußmodul 52 der ersten Heizleiter-Anordnung 12 realisiert wäre.

Bei dieser Ausführungsform wird ebenfalls das als selbstlimitierendes Parallelheizband bekannte Heizband 2, 21, 22 eingesetzt. Der Aufbau des Heizbandes 2, 21, 22 kann den Ausführungen zu Fig. 3 entnommen werden.
Das Anschlußmodul 5, 51, 52 nach Fig. 4 besteht aus dem erwähnten quaderförmigen Anschlußgehäuse 6, dessen offenes Gehäuseunterteil 66 mit einem stirnseitig angeordneten massiven Gehäuseendbereich 63 versehen ist. Dieser Gehäuseendbereich 63 ist ein dem Gehäuseunterteil 66 angeformter Bestandteil, wobei die dem Inneren des Gehäuseunterteiles 66 zugewandte Stirnfläche des Gehäuseendbereiches 63 und die Gehäuseinnenwandung 62 den offenen Bereich des Innenraumes 61 einschließen. Dem Gehäuseunterteil 66 sind stirnseitig des äußeren Bereiches der Gehäusewandung und des massiven Gehäuseendbereiches 63 verschiedenartige Gehäuseeinführungen 64 ausgenommen, die diesen Bereich der Gehäusewandung und den Gehäuseendbereich 63 durchdringen.

Dabei wird durch die Gehäuseeinführung 64, die der Gehäusewandung ausgenommen ist, das Heizband 2 in den Innenraum 61 des Gehäuseunterteiles 66 geführt. Der stirnseitig gegenüberliegende Gehäuseendbereich 63 weist drei Kontaktkammer auf, die beabstandet zueinander in Richtung der Gehäuselängsachse angeordnet sind. In der einzelnen Kontaktkammer ist jeweils ein Buchsenkontakt 73 und ein Stiftkontakt 721 aufgenommen.

Der als Verbindungselement 7 (Quetschelement) ausgeführte Buchsenkontakt 73 besitzt einen Bund 74 und einen endseitigen Quetschbereich, wobei mindestens der Quetschbereich in den Innenraum 61 des offenen Gehäuseunterteiles 66 hineinragt. Der Bund 74 und der Quetschbereich sind nach dem Vorbild gemäß Fig. 3 in einer Aufnahme- und einer Quernut (751, 75) geführt und fixiert, wobei die Aufnahmenut eine Längsnut ist, die dem Verlauf der Gehäuselängsachse des Gehäuseunterteiles 66 entspricht. Um den Bund 74 des betreffenden Buchsenkontaktes 73 ist ein Haltering 76 (clip) angeordnet, der den Buchsenkontakt 73 verriegelt. Die Büchse des einzelnen Buchsenkontaktes 73 ist in der betreffenden Kontaktkammer geführt. Am Ende der einzelnen elektrischen Leitung der (aus drei Leitungen integrierten) Verlängerungsleitung 3 ist ein einzelner und mit einem geeigneten Werkzeug lösbarer bzw. ansteckbarer Stiftkontakt 721 angequetscht, der in der einzelnen Kontaktkammer eingesetzt und elektrisch mit dem einzelnen Buchsenkontakt 73 verbunden ist. Der betreffende Stiftkontakt 721 ist jeweils in der Kontaktkammer mit dem erwähnten Haltering 76 verriegelt. Die Austritte der Verlängerungsleitung 3 außerhalb des Gehäuseunterteiles 66 sind durch Dichtkissen 20 abgedichtet.

Der Anschluß der einzelnen elektrischen Leitung des Heizbandes 2 an den betreffenden Buchsenkontakt wird nach dem Vorbild der Fig. 3 vorgenommen. Dabei sind die freigelegten und verzinnten Litzen der Leitungsenden des in den Innenraum 61 des Gehäuseunterteiles 66 geführten Heizbandes 2 dem Quetschbereich des betreffenden Buchsenkontaktes 73 eingeführt und vor der Einführung mit diesem verquetscht.

Das Vorbehandeln der mit Klebe-/Vergußmasse 19 vorgesehenen Stellen erfolgt auch nach der bezüglich zu Fig. 3 angegebenen Technologie. Gleichermaßen erfolgt nach Verschweißung des Gehäuseunterteiles 66 mit dem ihm randseitig aufliegenden Deckel das Befüllen des innenraumes 61 mit Klebe-/Vergußmasse 19, um das gewünschte vollständige Abdichten des Anschlußgehäuses 6 gegen Feuchtigkeits- und Flüssigkeitseintritt bei prophylaktisch angenommenen extrem niedrigen Druckverhältnissen, denen es betriebsmäßig ausgesetzt sein kann, zu erzielen.

In der Fig. 5 wird das einzelne Anschlußmodul 5, 53 mit zwei ihm unlösbar verbundenen Heizbändern 21, 22, die mit ihm von außen unlösbar verbunden sind, dargestellt. Dabei handelt es sich beispielsweise um das dritte Anschlußmodul 53 der dritten Heizleiter-Anordnung 14 nach der Fig. 2, das über die ihm unlösbar verbundenen betreffenden Heizbänder 21, 22 eingangsseitig mit dem ersten Anschlußmodul 51 und ausgangsseitig mit dem zweiten Anschlußmodul 52 der dritten Heizleiter-Anordnung 14 verbunden ist. Dabei lassen sich anstelle dem ersten oder zweiten Anschlußmodul 51, 52 (der dritten Heizleiter-Anordnung 14) die Vorbilder nach den Figuren 3 oder 4 verwenden.
Es sei dem angefügt, daß sich die (dem Rohrleitungssytem eines Flugzeuges installierte) Heizleiter-Kette mittels der vorbeschriebenen Kupplungstechnologie über ein oder mehrere elektrische Kupplungselemente 42 mit den Heizleiter-Anordnungen 1, 12 , 14 nach den Figuren 1 bis 3 bis zur n-ten Heizband-Anordnung 14n beliebig ausdehnen ließe.

Das Anschlußmodul 53 nach Fig. 5 besteht auch aus dem erwähnten quaderförmigen Anschlußgehäuse 6. Dabei grenzt die Gehäuseinnenwandung 62 des Gehäuseunterteiles 66 (im Vergleich der Ausführungen nach den Figuren 3 und 4) allein den offenen Bereich des Innenraumes 61 des Anschlußmoduls 53 ein. Dem Gehäuseunterteil 66 sind beiderseits der äußeren Stirnflächen der Gehäusewandung gleichartige Gehäuseeinführungen 64 ausgenommen, die die Gehäusewandung in Richtung der Gehäuselängsachse durchdringen. Dabei wird den sich gegenüberliegenden Gehäuseeinführungen 64 das erste oder zweite Heizband 21, 22 eingeführt, wobei der abgesetzte Bereich des einzelnen Heizbandes 21, 22 sich innerhalb des offenen Bereiches des Innenraumes 61 des Gehäuseunterteiles 66 befindet.

Die Anordnung der drei Stoßverbinder 71 geschieht nach dem Vorbild in der Fig. 3, welche ebenso in den gehäuse(unterteil)seitig eingelassenen Nuten [Aufnahmenut (Längsnut), Quernut] positioniert sind.
Dabei sind die Stoßverbinder 71 (Quetschverbinder) im (gehäuselängsachsig betrachtet) mittleren Bereich des offenen Gehäuseunterteiles 66 zueinander beabstandet und in Richtung der Gehäuselängsachse liegend angeordnet.

Der Anschluß der einzelnen elektrischen Leitung der beiden Heizbändes 21, 22 an den betreffenden Stoßverbinder 71 wird nach dem Vorbild der Fig. 3 vorgenommen. Dabei sind die freigelegten und verzinnten Litzen der betreffenden Leitungsenden des (durch die gegenüberliegenden Gehäuseeinführungen 64) in den Innenraum 61 des Gehäuseunterteiles 66 geführten ersten und zweiten Heizbandes 21, 22 dem betreffenden Quetschbereich des betreffenden Stoßverbinders 71 endseitig eingeführt und vor dem Einsetzen mit diesem verquetscht. Dabei sind die beiden betriebsmäßig nicht stromführende Leiter 84 (ausgekämmtes und danach verdrilltes Geflecht) der beiden Heizbänder 21, 22 dem in Gehäusequerrichtung mittig angeordneten Stoßverbinder 71 und die betriebsmäßig stromführenden Leitungen 82 der beiden Heizbänder 21, 22 separat dem betreffenden nebengelegenen Stoßverbinder 71 vor dem Einsetzen angeschlossen.

Das Vorbehandeln der mit Klebe-/Vergußmasse 19 vorgesehenen Stellen erfolgt auch nach der bezüglich zu Fig. 3 angegebenen Technologie. Gleichermaßen erfolgt nach Verschweißung des Gehäuseunterteiles 66 mit dem ihm aufliegenden Deckel das Befüllen des Innenraumes 61 mit Klebe-/Vergußmasse 19, um das gewünschte vollständige Abdichten des Anschlußgehäuses 6 gegen Feuchtigkeits- und Flüssigkeitseintritt bei prophylaktisch angenommenen extrem niedrigen Druckverhältnissen, denen es betriebsmäßig ausgesetzt sein kann, zu erzielen.

Diese Ausführungsform eines Anschlußmodules 53 nach der Fig. 5 wäre besonders im Reparaturfall für ein elektrisch gestörtes Heizband 2 (Kurzschlußfall) oder ein mechanisch verletztes Heizband 2 interessant, weil dann die auf der (installierten) Heizbandlänge lokalisierte Störung durch Trennung des Heizbandes 2 an der Störungsstelle und Verbindung der (an der Trennstelle) erhaltenen freien Heizbandenden mit dem Anschlußmodul beseitigt (aufgehoben) werden kann.

Allgemein setzt sich diese Art der elektrischen Kupplung immer zwischen zwei Heizleiter-Anordnungen 1, 12 bis zur n-ten Heizleiter-Anordnung 14n (nicht dargestellt) fort. Demnach sind wenigstens immer zwei Heizleiter-Anordnungen 1, 12 oder 14, 14n miteinander elektrisch gekuppelt.

Die an dem ein- und ausgangsseitig gelegenen Anschlußmodul 5 der betreffenden Heizleiter-Anordnung 1, 12 bis 14n angeschlossene(n) (elektrischen Leitungen der) Verlängerungsleitung 3 ist mit dem (sind mit den betreffenden) verquetschten Stiftkontakt(en) 721 unlösbar und mit dem Durchgangsstecker 17 (bzw. mit dem Kupplungselement 42) lösbar verbunden. Die stromführende Seite wird durch einen (zusätzlich) aufgeschrumpften Schrumpfschlauch zwischen der Außenmantelfläche des Durchgangssteckers 17 und dem Außenmantel der Verlängerungsleitung 3 unlösbar gestaltet. Durch den aufgeschrumpften Schrumpfschlauch ist ein Lösen der elektrischen Verbindung (mittels Werkzeug und nicht ohne Verletzung des Schrumpfschlauches) ausgeschlossen. Damit wird durch diese Maßnahme das Berühren einer gelösten elektrischen Verbindung vermieden.

Das elektrische Kupplungselement 42 ist wenigstens einpolig ausgebildet. Es kann auch mehrpolig gestaltet sein. Dabei setzt sich das elektrische Kupplungselement 42 aus der Integration eines oder mehrerer Durchgangsstecker 17 zusammen, die frei- und / oder selbsttragend beweglich angeordnet sind.

Der Aufbau der Verlängerungsleitung 3 korreliert mit dem Aufbau des eingesetzten Heizbandes 2. Danach besteht sie wenigstens aus einer betriebsmäßig stromführenden Leitungen 81. Sie wird (im häufigsten Anwendungsfall) mit dem Aufbau von zwei flexibelen elektrischen Leitungen als betriebsmäßig stromführende Leitungen 81 und einer flexibelen elektrischen Leitung als betriebsmäßig nicht stromführende Leitung (83) eingesetzt.

Die Heizbänder 2, 21, 22 der Heizleiter-Anordnungen 1, 12, 14, 14n sind den Rohrleitungen eines Flugzeuges und deren zugeordneten Armaturen und Zubehör befestigt, um beispielsweise durch Temperaturübertragung (Aufheizung) das Einfrieren von Abwassersystemen zu verhindern.

Auch sind alle installierten Verbindungselemente 7 des einzelnen Anschlußmodules 5, 51, 52 und im besonderen die eingesetzten Stoßverbinder 71, sowie die Buchsen- und /oder die Stiftkontakte 73, 721 mindestens mit einem im Quetschbereich und in Längsrichtung angeordnetem Sackloch versehen.

Durch diese Maßnahme wird die Abwanderung der dort eingeschlossenen Feuchtigkeit oder Flüssigsubstanz verhindert und weitergeleitete Kapilarwirkung durch das Verbindungselement 7 vermieden.

Alle miteinander elektrisch gekuppelten Heizleiter-Anordnungen 1, 12, 14 bilden eine Heizleiter-Kette. Dabei ist eine der beiden Heizleiter-Anordnungen 1, 12, 14n, 14n, die immer endseitig der Heizleiter-Kette elektrisch gekuppelt ist, mit dem internen Bordnetz des Flugzeuges, das der Heizleiter-Kette elektrische Energie einspeist, verbunden. Das dem Anschlußmodul 5 angeschlossenen (und die Heizbandkette beendende) Heizband 2 der anderen (endseitig der Heizleiter-Kette angeordneten) Heizleiter-Anordnung 14n, der nicht die elektrische Energie des Flugzeug-Bordnetzes zugeführt wird, ist am freien Ende mit der Heizband-Endkappe (nach der eingangs beschriebenen Art) versehen.

## Patentansprüche

1. Heizteiter-Verbindungssystem für einem Flugzeug, umfassend mehrere Heizleiter-Anordnungen (1, 12, 14, 14n), die sich mittels Verlängerungsleitungen (3) über ein Kupplungselement (42) elektrisch kuppeln lassen,
**dadurch gekennzeichnet, daß** alle Heizleiter-Anordnungen (1, 12, 14, 14n) einzelne Anschlußmodule (5) aufweisen, die mit einem Heizband (2) verbunden sind, wobei die einzelne Heizleiter-Anordnung (1, 12, 14, 14n) aber wenigstens aus einem Anschlußmodul (5) besteht, daß alle Anschlußmodule (5) ein elektrisches Anschlußgehäuse (6), das mit Bestandteil eines jeden Anschlußmodules (5) ist und das mindestens eine Gehäuseeinführung (64) besitzt, und wenigstens ein elektrisches Verbindungselement (7), das innerhalb des Anschlußgehäuses (6) angeordnet ist, aufweisen und der Innenraum (61) des Anschlußgehäuses (6) allseitig mit einem Abdichtmittel (19) gefüllt ist, daß das Heizband (2) mit seinem Außenmantel (161) oder die Verlängerungsleitung (3), die wenigstens eine mit einer Leiterisolierung (162) umhüllte elektrische Leitung umfaßt, durch die Gehäuseeinführung (64) geführt sind, wobei sich mindestens deren abgesetzter Bereich im Innenraum (61) des Anschlußgehäuses (6) befindet, daß stets zwischen zwei Heizleiter-Anordnungen (1, 12, 14, 14n) ein Kupplungselement (42) angeordnet ist, mit dem jeweils die Verlängerungsleitung (3) des zu kuppelnden Anschlußmodules (5) verbunden ist, daß die einzelne elektrische Leitung der Verlängerungsleitungen (3), die nicht Bestandteil des Heizbandes (2) ist, mit dem einzelnen Verbindungselement (7), dem jeweils eine einzelne elektrische Leitung des Heizbandes (2) angeschlossen ist, verbunden ist, daß das einzelne Verbindungselement (7) in einer Aufnahmenut (751), die innerhalb des Anschlußgehäuses (6) eingelassen ist, fixiert und von dem Abdichtmittel (19) umgeben ist, wobei wenigstens der Verbindungsbereich des Verbindungselementes (7), der sich im Innenraum (61) des Anschlußgehäuses (6) befindet, allseitig von dem Abdichtmittel (19) umgeben ist,
daß außerdem der Innenraum (61) des Anschlußgehäuses (6) und der abgesetzte Bereich des Heizbandes (2) und / oder der Verlängerungsleitung (3) allseitig von dem Abdichtmittel (19) umgeben ist und vollständig gegen Feuchtigkeits- und Flüssigkeitseintritt bei extrem niedrigen Druckverhältnissen zur Gewährleistung der Dichtigkeitsanforderungen abgedichtet ist.

2. Heizleiter-Verbindungssystem nach Anspruch 1,
**dadurch gekennzeichnet, daß** das Verbindungselement (7) ein Quetschelement ist, dessen Verbindungsbereich als Quetschbereich ausgebildet ist.

3. Heizleiter-Verbindungssystem nach den Ansprüchen 1 und 2,
**dadurch gekennzeichnet, daß** das in der Aufnahmenut (751) fixierte Verbindungselement (7) teilweise von dem Abdichtmittel (19) umgeben ist.

4. Heizleiter-Verbindungssystem nach Anspruch 1,
**dadurch gekennzeichnet, daß** die Gehäuseeinführung (64) mit Aussparungen (184) versehen ist, welche sich außerhalb des Innenraumes (61) des Anschlußgehäuses (6) befinden und mit der Abdichtmittel (19) ausgefüllt sind,

5. Heizleiter-Verbindungssystem nach Anspruch 4,
**dadurch gekennzeichnet, daß** die Gehäuseeinführung (64) teilweise mit Aussparungen (184) versehen ist.

6. Heizleiter-Verbindungssystem nach den Ansprüchen 1 und 2,
**dadurch gekennzeichnet, daß** das Anschlußgehäuse (6) aus einem offenen Gehäuseunterteil (66) und einem Gehäusedeckel zusammengesetzt ist, die miteinander kraft- und / oder formschlüssig verbunden sind, wobei die Gehäuseeinführung (64) dem Gehäuseunterteil (66) ausgenommen ist, und daß wenigstens der Quetschbereich der Verbindungselemente (7), der sich innerhalb des offenen Bereiches des Gehäuseunterteiles (66) befindet, allseitig vom Abdichtmittel (19) umgeben ist.

7. Heizleiter-Verbindungssystem nach Anspruch 1,
**dadurch gekennzeichnet, daß** wenigstens zwei Heizleiter-Anordnungen (1, 12, 14, 14n) miteinander elektrisch gekuppelt sind, und daß die dem gehäuseein- und ausgangsseitig gelegenen Anschlußmodul (5) angeschlossene Verlängerungsleitung (3) unlösbar oder mittels einer Steckverbindung mit einem Werkzeug lösbar mit dem Anschlußmodul (5) verbunden ist.

8. Heizleiter-Verbindungssystem nach Anspruch 1,
**dadurch gekennzeichnet, daß** das freie Ende der dem Anschlußmodul (5) gehäuseein- und ausgangsseitig angeschlossenen Verlängerungsleitung (3) unlösbar oder mittels einer Steckverbindung mit einem Werkzeug lösbar mit dem Kupplungselement (42) verbunden ist.

9. Heizleiter-Verbindungssystem nach Anspruch 1,
**dadurch gekennzeichnet, daß** zwischen zwei Anschlußmodulen (5), einem ersten und einem zweiten Anschlußmodul (51, 52), ein drittes Anschlußmodul (53) geschalten ist, und daß dem dritten Anschlußmodul (53) zwei Heizbänder (2), das erste und ein zweites Heizband (21, 22), fest angeschlossen sind, wobei das erste Anschlußmodul (51) mit dem ersten Heizband (21) und das zweite Anschlußmodul (52) mit dem zweiten Heizband (22) unlösbar verbunden ist.

10. Heizleiter-Verbindungssystem nach Anspruch 1,
**dadurch gekennzeichnet, daß** das Heizband (2, 21, 22), das die Anschlußmodule (5, 51, 52, 53) miteinander verbindet, ein Widerstands- oder Parallelheizband ist, das als Ein- oder Mehrader-Heizband ausgebildet und als Flach- oder Rundheizband mit verschiedenen Querschnitten ausgeführt ist.

11. Heizleiter-Verbindungssystem nach Anspruch 10,
**dadurch gekennzeichnet, daß** das Heizband (2, 21, 22) mit einem selbstlimitierenden Heizband (2, 21, 22) für verschiedene Temperaturbereiche realisiert ist.

12. Heizleiter-Verbindungssystem nach Anspruch 11,
**dadurch gekennzeichnet, daß** das Heizband (2, 21, 22) als Hoch-oder Niedertemperatur-Heizband ausgeführt ist.

13. Heizleiter-Verbindungssystem nach Anspruch 1,
**dadurch gekennzeichnet, daß** die Verlängerungsleitung (3) mehrere flexibele elektrische Leitungen aufweist, derart, daß zwei Leitungen als betriebsmäßig stromführende Leitungen (81) und eine Leitung als betriebsmäßig nicht stromführende Leitung (83) eingesetzt sind.

14. Heizleiter-Verbindungssystem nach Anspruch 1,
**dadurch gekennzeichnet, daß** das elektrische Kupplungselement (42) wenigstens einpolig ausgebildet ist.

15. Heizleiter-Verbindungssystem nach Anspruch 14,
**dadurch gekennzeichnet, daß** das elektrische Kupplungselement (42) aus der Integration wenigstens eines Durchgangssteckers (17) zusammengesetzt ist.

16. Heizleiter-Verbindungssystem nach Anspruch 15,
**dadurch gekennzeichnet, daß** der Durchgangsstecker (17) frei- und / oder selbsttragend beweglich angeordnet ist.

17. Heizleiter-Verbindungssystem nach Anspruch 1,
**dadurch gekennzeichnet, daß** die Heizbänder (2, 21, 22) der Heizleiter-Anordnungen (1, 12, 14, 14n) an Rohrleitungen eines flugzeuges und deren zugeordneten Armaturen und Zubehör befestigbar sind.

18. Heizleiter-Verbindungssystem nach den Ansprüchen 1 und 2,
**dadurch gekennzeichnet, daß** das Verbindungselement (7) als Stoßverbinder (71) ausgebildet ist, der mittig seiner Längsachse einen Bund (74) und an seinen beiden freien Enden einen Quetschbereich aufweist, wobei die endseitigen Quetschbereiche separat in einer Aufnahmenut (751) angeordnet und geführt sind, die durch eine die Quernut (75) um den Bund (74) fixiert sind. wobei der Quernut (75) innerhalb des Anschlußgehäuses (6) eingelassen ist.

19. Heizteiter-Verbindungssystem nach Anspruch 18,
**dadurch gekennzeichnet, daß** die Aufnahmenut (751), die die endseitigen Quetschbereiche des Verbindungselementes (7) separat aufnimmt, eine Längsnut ist, die dem Verlauf einer Längsachse des Anschlußgehäuses (6) entspricht.

20. Heizleiter-Verbindungssystem nach Anspruch 1,
**dadurch gekennzeichnet, daß** das Anschlußgehäuse (6) wenigstens einen massiven Gehäuseendbereich (63) mit in seiner Längsachse angeordneten Kontaktkammern aufweist.

21. Heizleiter-Verbindungssystem nach Anspruch 20,
**dadurch gekennzeichnet, daß** die einzelne Kontaktkammer zur Aufnahme eines Buchsen- und / oder eines Stiftkontaktes (73, 721) geeignet ist.

22. Heizleiter-Verbindungssystem nach den Ansprüchen 1 und 2 und 18 bis 20,
**dadurch gekennzeichnet, daß** das Verbindungselement (7) als Buchsenkontakt (73) ausgeführt ist, der einen Bund (74) und einen Quetschbereich aufweist, der sich im Innenraum (61) des Anschlußgehäuses (6) befindet oder zumindestens dorthin hineinragt, wobei um den Bund (74) ein Haltering (76) verriegelt ist und die Büchse des Buchsenkontaktes (73) in der Kontaktkammer geführt ist.

23. Heizleiter-Verbindungssystem nach den Ansprüchen 1 und 18 bis 20,
**dadurch gekennzeichnet, daß** an einem Ende der einzelnen elektrischen Leitung der einadrigen Verlängerungsleitung (3) ein einzelner mit einem weiteren Werkzeug lösbarer oder ein ansteckbarer Stiftkontakt (721) angequetscht ist, der in der einzelnen Kontaktkammer eingesetzt und elektrisch mit dem einzelnen Buchsenkontakt (73) verbunden ist, wobei der Stiftkontakt (721) in der Kontaktkammer mit dem Haltering (76) verriegelt ist.

24. Heizleiter-Verbindungssystem nach Anspruch 23,
**dadurch gekennzeichnet, daß** die Austritte der Verlängerungsleitung (3) außerhalb des Anschlußgehäuses (6) durch ein Dichtkissen (20) abgedichtet sind.

25. Heizleiter-Verbindungssystem nach den Ansprüchen 1, 2, 19, 22 und 23,
**dadurch gekennzeichnet, daß** allgemein das Verbindungselement (7) und im besonderen der Stoßverbinder (71), sowie der Buchsen- und / oder der Stiftkontakt (73, 721) mindestens mit einem im Quetschbereich und in Längsrichtung angeordnetem Sackloch versehen sind, damit die Abwanderung der dort eingeschlossenen Feuchtigkeit oder Flüssigsubstanz verhindert und weitergeleitete Kapilarwirkung durch das Verbindungselement (7) vermieden wird.

26. Heizleiter-Verbindungssystem nach Anspruch 1,
**dadurch gekennzeichnet, daß** alle miteinander elektrisch gekuppelten Heizleiter-Anordnungen (1, 12, 14, 14n) einen Heizleiter-Kette bilden, bei der eine der beiden Heizleiter-Anordnungen (1, 12, 14n), die endseitig der Heizleiter-Kette elektrisch gekuppelt ist, mit einem internen Bordnetz eines Flugzeuges verbindbar ist, das der Heizleiter-Kette elektrische Energie einspeist.

27. Heizleiter-Verbindungssystem nach den Ansprüchen 1, 3 und 4,
**dadurch gekennzeichnet, daß** das Abdichtmittel (19) ein Klebdichtstoff ist, der neben seinem Kleb- und Dichtverhalten auch elektrisch und wärmetechnisch isoliert.

28. Heizleiter-Verbindungssystem nach Anspruch 27,
**dadurch gekennzeichnet, daß** man als Klebdichtstoff eine Klebe-/Vergußmasse verwendet, die sich aus einem zweikomponentigen Material zusammensetzt und auf einem Epoxy /Polyamid basiert, der ein Vergießen und Verkleben der Installationsbereiche im Innenraum (61) des Anschlußgehäuses (6) realisiert und ein allseitiges Vergießen des Innenraum (61) bis an die Innenwandung (61) des kunststoffartigen Anschlußgehäuses (6) reichend ohne weitere Lufteinschlüsse vollbringt.

29. Heizleiter-Verbindungssystem nach Anspruch 6,
**dadurch gekennzeichnet, daß** das Anschlußgehäuse (6) aus einem kunststoffartigen Gehäuseunterteil (66) und einem auf die ganze Länge des Anschlußmoduls (5) bezogenen kunststoffartigen Gehäusedeckel, der den Innenraum (61) des Anschlußgehäuses (66) abdeckt, integriert ist.

30. Heizleiter-Verbindungssystem nach den Ansprüchen 6 und 20,
**dadurch gekennzeichnet, daß** der Gehäusedeckel der ganzen Länge des freiliegenden Wanddickenverlaufes des Gehäuseunterteiles (66) aufliegt, wobei die Führungsbohrungen (183) und die Kontaktkammern der massiven Gehäusebereiche (63) als offene Nuten ausgebildet sind, so daß sich die Bereiche des Gehäusedeckels und der freien Enden der Wandung des Gehäuseunterteiles (66) formschlüssig durch Verschweißung verbinden lassen.

## Claims

1. Heat conductor connection system for an aircraft, comprising a plurality of heat conductor arrangements (1, 12, 14, 14n), which may be electrically coupled via a coupling element (42) by means of extension cables (3), **characterised in that** all heat conductor arrangements (1, 12, 14, 14n) comprise individual connection modules (5), which are connected to a heater band (2), the individual heat conductor arrangement (1, 12, 14, 14n) consisting, however, of at least one connection module (5), **in that** all connection modules (5) comprise an electrical connection housing (6), which is also a constituent of each connection module (5) and which has at least one housing lead-in opening (64), and at least one electrical connecting element (7), which is arranged inside the connection housing (6), and the inner chamber (61) of the connection housing (6) is filled on all sides with a sealing means (19), **in that** the heater band (2) with its outer sheath (161) or the extension cable (3), which comprises at least one electrical cable encased by cable insulation (162), are guided through the housing lead-in opening (64), wherein at least their offset region is located in the inner chamber (61) of the connection housing (6), **in that** a coupling element (42), to which the extension cable (3) of the connection module (5) to be coupled is in each case connected, is arranged between two heat conductor arrangements (1, 12, 14, 14n), **in that** the individual electrical cable, which is not a constituent of the heater band (2), of the extension cables (3) is connected to the individual connecting element (7), to which an individual electrical cable of the heater band (2) is in each case connected, **in that** the individual connecting element (7) is fixed in a receiving groove (751), which is formed inside the connection housing (6), and is surrounded by the sealing means (19), at least the connection region of the connecting element (7), which is located in the inner chamber (61) of the connection housing (6), being surrounded on all sides by the sealing means (19), **in that** the inner chamber (61) of the connection housing (6) and the offset region of the heater band (2) and/or the extension cable (3) are also surrounded on all sides by the sealing means (19) and are completely sealed against moisture and fluid inflow at extremely low pressure ratios so as to meet the impermeability requirements.

2. Heat conductor connection system according to claim 1, **characterised in that** the connecting element (7) is a crimping element, the connection region of which is configured as a crimping region.

3. Heat conductor connection system according to claims 1 and 2, **characterised in that** the connecting element (7) fixed in the receiving groove (751) is partially surrounded by the sealing means (19).

4. Heat conductor connection system according to claim 1, **characterised in that** the housing lead-in opening (64) is provided with recesses (184), which are located outside the inner chamber (61) of the connection housing (6) and are filled with the sealing means (19).

5. Heat conductor connection system according to claim 4, **characterised in that** the housing lead-in opening (64) is partially provided with recesses (184).

6. Heat conductor connection system according to claims 1 and 2, **characterised in that** the connection housing (6) is composed of an open housing lower part (66) and a housing cover, which are connected to each other non-positively and/or with an interlocking fit, the housing lead-in opening (64) being formed in the housing lower part (66), and **in that** at least the crimping region, which is located inside the open region of the housing lower part (66), of the connecting elements (7) is surrounded on all sides by the sealing means (19).

7. Heat conductor connection system according to claim 1, **characterised in that** at least two heat conductor arrangements (1, 12, 14, 14n) are electrically coupled to each other, and **in that** the extension cable (3), which is connected to the connection module (5) located on the housing inlet and outlet sides, is connected non-detachably, by means of a plug-type connector, to a tool or detachably to the connection module (5).

8. Heat conductor connection system according to claim 1, **characterised in that** the free end of the extension cable (3) connected on the housing inlet and outlet sides to the connection module (5) is connected non-detachably, by means of a plug-type connector, to a tool or detachably to the coupling element (42).

9. Heat conductor connection system according to claim 1, **characterised in that** a third connection module (53) is inserted between two connection modules (5), a first and a second connection module (51, 52), and **in that** two heater bands (2), the first and a second heater band (21, 22), are rigidly connected to the third connection module (53), the first connection module (51) being connected to the first heater band (21) and the second connection module (52) being non-detachably connected to the second heater band (22).

10. Heat conductor connection system according to claim 1, **characterised in that** the heater band (2, 21, 22), which connects the connection modules (5, 51, 52, 53) to each other, is a resistance heater band or a parallel heater band, which is configured as a single-core or multi-core heater band and is configured as a flat heater band or a circular heater band exhibiting various cross-sections.

11. Heat conductor connection system according to claim 10, **characterised in that** the heater band (2, 21, 22) is configured as a self-limiting heater band (2, 21, 22) for various temperature ranges.

12. Heat conductor connection system according to claim 11, **characterised in that** the heater band (2, 21, 22) is configured as a high-temperature or low-temperature heater band.

13. Heat conductor connection system according to claim 1, **characterised in that** the extension cable (3) comprises a plurality of flexible electrical cables such that two cables may be employed as functional current-carrying cables (81) and one cable as a functional non-current-carrying cable (83).

14. Heat conductor connection system according to claim 1, **characterised in that** the electrical coupling element (42) is configured to be at least unipolar.

15. Heat conductor connection system according to claim 14, **characterised in that** the electrical coupling element (42) is formed from the integration of at least one through-plug (17).

16. Heat conductor connection system according to claim 15, **characterised in that** the through-plug (17) is movably arranged in an unsupported and/or self-supporting manner.

17. Heat conductor connection system according to claim 1, **characterised in that** the heater bands (2, 21, 22) of the heat conductor arrangements (1, 12, 14, 14n) may be attached to aircraft pipework and the fittings and accessories associated therewith.

18. Heat conductor connection system according to claims 1 and 2, **characterised in that** the connecting element (7) is configured as a butt connector (71), which comprises a collar (74) in the centre of its longitudinal axis and a crimping region at its two free ends, the end crimping regions, which are fixed around the collar (74) by a the transverse groove (75), being arranged and guided separately in a receiving groove (751), the transverse groove (75) being formed inside the connection housing (6).

19. Heat conductor connection system according to claim 18, **characterised in that** the receiving groove (751), which separately receives the end crimping regions of the connecting element (7), is a longitudinal groove, which corresponds to the course of a longitudinal axis of the connection housing (6).

20. Heat conductor connection system according to claim 1, **characterised in that** the connection housing (6) comprises at least one solid housing end region (63) having contact chambers arranged in its longitudinal axis.

21. Heat conductor connection system according to claim 20, **characterised in that** the individual contact chamber is capable of receiving a socket contact and/or a pin contact (73, 721).

22. Heat conductor connection system according to claims 1 and 2 and 18 to 20, **characterised in that** the connecting element (7) is configured as a socket contact (73), which comprises a collar (74) and a crimping region, which is located in the inner chamber (61) of the connection housing (6) or at least protrudes into said inner chamber, a retaining ring (76) being locked around the collar (74) and the socket of the socket contact (73) being guided in the contact chamber.

23. Heat conductor connection system according to claims 1 and 18 to 20, **characterised in that** at one end of the individual electrical cable of the single-core extension cable (3) an individual pin contact (721), which may be detached by means of a further tool or is attachable, is crimped, which pin contact is inserted in the individual contact chamber and is electrically connected to the individual socket contact (73), the pin contact (721) being locked by the retaining ring (76) in the contact chamber.

24. Heat conductor connection system according to claim 23, **characterised in that** the outlets of the extension cable (3) are sealed outside the connection housing (6) by a sealing cushion (20).

25. Heat conductor connection system according to claims 1, 2, 19, 22 and 23, **characterised in that**, in general, the connecting element (7) and, in particular, the connector (71) and the socket contact and/or the pin contact (73, 721) are provided with a blind hole arranged in the crimping region and in the longitudinal direction so that the migration of the moisture or liquid substance enclosed therein is impeded and forwarded capillary action is prevented by means of the connecting element (7).

26. Heat conductor connection system according to claim 1, **characterised in that** all electrically coupled heat conductor arrangements (1, 12, 14, 14n) form a heat conductor chain, in which one of the two heat conductor arrangements (1, 12, 14n), which is electrically coupled to the end of the heat conductor chain, may be connected to internal on-board wiring, which supplies electrical power to the heat conductor chain, of an aircraft.

27. Heat conductor connection system according to claims 1, 3 and 4, **characterised in that** the sealing means (19) is an adhesive sealant, which in addition to its adhesive and sealant behaviour also provides electrical and thermal insulation.

28. Heat conductor connection system according to claim 27, **characterised in that** an adhesive/sealing compound, which is composed of a two-constituent material and is based on an epoxy/polyamide, which seals and glues the installation regions in the inner chamber (61) of the connection housing (6) and seals the inner chamber (61) on all sides as far as the internal wall (61) of the plastics material-type connection housing (6) without further trapping of air, is used as an adhesive sealant.

29. Heat conductor connection system according to claim 6, **characterised in that** the connection housing (6) is composed of a plastics material-type housing lower part (66) and a plastics material-type housing cover, which corresponds to the entire length of the connection module (5) and which covers the inner chamber (61) of the connection housing (66).

30. Heat conductor connection system according to claims 6 and 20, **characterised in that** the housing cover rests on the entire length of the exposed wall thickness course of the housing lower part (66), the guide bores (183) and the contact chambers of the solid housing regions (63) being configured as open grooves such that the regions of the housing cover and of the free ends of the wall of the housing lower part (66) may be positively connected by welding.

## Revendications

1. Système de connexion pour conducteurs de chauffage pour un avion, comprenant plusieurs agencements de conducteur de chauffage (1, 12, 14, 14n) qui peuvent être couplés électriquement à l'aide de lignes de rallonge (3), par l'intermédiaire d'un élément de couplage (42), **caractérisé en ce que** tous les agencements de conducteur de chauffage (1, 12, 14, 14n) présentent des modules de raccordement (5) individuels qui sont reliés à un ruban chauffant (2), chaque agencement de conducteur de chauffage (1, 12, 14, 14n) individuel étant toutefois constitué d'au moins un module de raccordement (5), **en ce que** tous les modules de raccordement (5) présentent un boîtier de raccordement (6) électrique, qui fait partie intégrante de chaque module de raccordement (5) et possède au moins une entrée de boîtier (64), et au moins un élément de connexion (7) électrique, disposé à l'intérieur du boîtier de raccordement (6), et l'espace intérieur (61) du boîtier de raccordement (6) est rempli sur tous les côtés avec un matériau d'étanchéité (19), **en ce que** le ruban chauffant (2), avec son enveloppe extérieure (161), ou la ligne de rallonge (3), qui comprend au moins un conducteur électrique entouré d'une isolation (162) de conducteur, passe dans l'entrée de boîtier (64), au moins leur partie étagée se situant dans l'espace intérieur (61) du boîtier de raccordement (6), **en ce qu'**il est toujours prévu, entre deux agencements de conducteur de chauffage (1, 12, 14, 14n), un élément de couplage (42) auquel est connectée respectivement la ligne de rallonge (3) du module de raccordement (5) à coupler, **en ce que** le conducteur électrique individuel des lignes de rallonge (3), qui ne fait pas partie du ruban chauffant (2), est relié à l'élément de connexion (7) individuel auquel est connecté chaque fois un conducteur électrique individuel du ruban chauffant (2), **en ce que** l'élément de connexion (7) individuel est fixé dans une rainure réceptrice (751), aménagée à l'intérieur du boîtier de raccordement (6), et est entouré par le matériau d'étanchéité (19), au moins la partie de connexion de l'élément de connexion (7), qui est située dans l'espace intérieur (61) du boîtier de raccordement (6), étant entourée sur tous les côtés par le matériau d'étanchéité (19), **en ce que**, en outre, l'espace intérieur (61) du boîtier de raccordement (6) et la partie étagée du ruban chauffant (2) et/ou de la ligne de rallonge (3) sont rempli/entourée sur tous les côtés par le matériau d'étanchéité (19) et sont rendus totalement étanches pour empêcher la pénétration d'humidité et de liquide en présence de pressions extrêmement faibles, afin de garantir le respect des prescriptions d'étanchéité.

2. Système de connexion pour conducteurs de chauffage selon la revendication 1, **caractérisé en ce que** l'élément de connexion (7) est un élément de sertissage dont la partie de connexion est réalisée sous forme de portion de sertissage.

3. Système de connexion pour conducteurs de chauffage selon les revendications 1 et 2, **caractérisé en ce que** l'élément de connexion (7) fixé dans la rainure réceptrice (751) est entouré en partie par le matériau d'étanchéité (19).

4. Système de connexion pour conducteurs de chauffage selon la revendication 1, **caractérisé en ce que** l'entrée de boîtier (64) est pourvue d'évidements (184) qui se trouvent à l'extérieur de l'espace intérieur (61) du boîtier de raccordement (6) et sont remplis avec le matériau d'étanchéité (19).

5. Système de connexion pour conducteurs de chauffage selon la revendication 4, **caractérisé en ce que** sur une partie, l'entrée de boîtier (64) est pourvue d'évidements (184).

6. Système de connexion pour conducteurs de chauffage selon les revendications 1 et 2, **caractérisé en ce que** le boîtier de raccordement (6) se compose d'une partie inférieure (66) ouverte et d'un couvercle de boîtier qui sont liés l'un à l'autre par serrage et/ou par complémentarité de formes, l'entrée de boîtier (64) étant aménagée dans la partie de boîtier inférieure (66), et **en ce qu'**au moins la portion de sertissage des éléments de connexion (7), qui se situe à l'intérieur de la région ouverte de la partie de boîtier inférieure (66), est entourée sur tous les côtés par le matériau d'étanchéité (19).

7. Système de connexion pour conducteurs de chauffage selon la revendication 1, **caractérisé en ce qu'**au moins deux agencements de conducteur de chauffage (1, 12, 14, 14n) sont couplés électriquement entre eux et **en ce que** la ligne de rallonge (3) connectée au module de raccordement (5) situé côté entrée et sortie du boîtier est reliée de manière indémontable au module de raccordement (5) ou bien de manière démontable, via une connexion enfichable, en pouvant être séparée à l'aide d'un outil.

8. Système de connexion pour conducteurs de chauffage selon la revendication 1, **caractérisé en ce que** l'extrémité libre de la ligne de rallonge (3) connectée au module de raccordement (5), côté entrée et sortie du boîtier, est reliée de manière indémontable à l'élément de couplage (42) ou bien de manière démontable, via une connexion enfichable, en pouvant être séparée à l'aide d'un outil.

9. Système de connexion pour conducteurs de chauffage selon la revendication 1, **caractérisé en ce qu'**un troisième module de raccordement (53) est branché entre deux modules de raccordement (5), à savoir un premier et un deuxième module de raccordement (51, 52), et **en ce que** deux rubans chauffants (2), à savoir le premier et un deuxième ruban chauffant (21, 22), sont connectés solidement au troisième module de raccordement (53), le premier module de raccordement (51) étant relié de façon indémontable au premier ruban chauffant (21) et le deuxième module de raccordement (52) au deuxième ruban chauffant (22).

10. Système de connexion pour conducteurs de chauffage selon la revendication 1, **caractérisé en ce que** le ruban chauffant (2, 21, 22), qui relie les modules de raccordement (5, 51, 52, 53) entre eux, est un ruban chauffant résistant ou parallèle qui est réalisé sous forme de ruban monoconducteur ou multiconducteur et est conformé en ruban chauffant plat ou rond, avec des sections différentes.

11. Système de connexion pour conducteurs de chauffage selon la revendication 10, **caractérisé en ce que** le ruban chauffant (2, 21, 22) est réalisé à l'aide d'un ruban chauffant (2, 21, 22) à auto-limitation pour des plages de températures différentes.

12. Système de connexion pour conducteurs de chauffage selon la revendication 11, **caractérisé en ce que** le ruban chauffant (2, 21, 22) est réalisé comme ruban à haute température ou à basse température.

13. Système de connexion pour conducteurs de chauffage selon la revendication 1, **caractérisé en ce que** la ligne de rallonge (3) comporte plusieurs conducteurs électriques flexibles, de telle sorte que deux conducteurs soient utilisés comme conducteurs (81) parcourus par le courant pendant le fonctionnement, et un conducteur soit utilisé comme conducteur (83) non parcouru par le courant pendant le fonctionnement.

14. Système de connexion pour conducteurs de chauffage selon la revendication 1, **caractérisé en ce que** l'élément de couplage (42) électrique est au moins unipolaire.

15. Système de connexion pour conducteurs de chauffage selon la revendication 14, **caractérisé en ce que** l'élément de couplage (42) électrique est constitué par intégration d'au moins un connecteur de passage (17).

16. Système de connexion pour conducteurs de chauffage selon la revendication 15, **caractérisé en ce que** le connecteur de passage (17) est disposé en porte à faux et/ou de façon mobile en étant autoporteur.

17. Système de connexion pour conducteurs de chauffage selon la revendication 1, **caractérisé en ce que** les rubans chauffants (2, 21, 22) des agencements de conducteur de chauffage (1, 12, 14, 14n) peuvent être fixés aux tuyauteries d'un avion et à leur robinetterie et leurs accessoires associés.

18. Système de connexion pour conducteurs de chauffage selon les revendications 1 et 2, **caractérisé en ce que** l'élément de connexion (7) est réalisé sous forme de connecteur bout à bout (71) qui, au milieu de son axe longitudinal, présente un collet (74) et, à ses deux extrémités libres, une portion de sertissage, les portions de sertissage côté extrémités étant disposées et guidées séparément dans une rainure réceptrice (751) et étant bloquées par une gorge transversale (75) qui entoure le collet (74) et est aménagée à l'intérieur du boîtier de raccordement (6).

19. Système de connexion pour conducteurs de chauffage selon la revendication 18, **caractérisé en ce que** la rainure réceptrice (751), qui reçoit séparément les portions de sertissage côté extrémité de l'élément de connexion (7), est une rainure longitudinale qui correspond au tracé d'un axe longitudinal du boîtier de raccordement (6).

20. Système de connexion pour conducteurs de chauffage selon la revendication 1, **caractérisé en ce que** le boîtier de raccordement (6) présente au moins une portion d'extrémité de boîtier (63) pleine, avec des chambres de contact aménagées suivant son axe longitudinal.

21. Système de connexion pour conducteurs de chauffage selon la revendication 20, **caractérisé en ce que** chaque chambre de contact est adaptée pour recevoir un contact à douille et/ou un contact à broche (73, 721).

22. Système de connexion pour conducteurs de chauffage selon les revendications 1 et 2 et 18 à 20, **caractérisé en ce que** l'élément de connexion (7) est réalisé sous forme de contact à douille (73) présentant un collet (74) et une portion de sertissage qui se trouve dans l'espace intérieur (61) du boîtier de raccordement (6) ou, au moins, avance dans celui-ci, une bague de retenue (76) étant verrouillée autour du collet (74) et la douille du contact à douille (73) étant guidée dans la chambre de contact.

23. Système de connexion pour conducteurs de chauffage selon les revendications 1 et 18 à 20, **caractérisé en ce qu'**à une extrémité du conducteur électrique unique de la ligne de rallonge (3) monoconducteur, est serti un contact à broche (721) individuel, pouvant être démonté à l'aide d'un autre outil ou pouvant être enfiché, qui est monté dans la chambre de contact individuelle et est relié électriquement au contact à douille (73) individuel, le contact à broche (721) étant verrouillé dans la chambre de contact par la bague de retenue (76).

24. Système de connexion pour conducteurs de chauffage selon la revendication 23, **caractérisé en ce que** les sorties de la ligne de rallonge (3), à l'extérieur du boîtier de raccordement (6), sont rendues étanches à l'aide d'un coussin d'étanchéité (20).

25. Système de connexion pour conducteurs de chauffage selon les revendications 1, 2, 19, 22 et 23, **caractérisé en ce que** l'élément de connexion (7) en général et le connecteur bout à bout (71) en particulier, ainsi que le contact à douille et/ou à broche (73, 721) sont pourvus au moins d'un trou borgne aménagé dans la portion de sertissage, dans la direction longitudinale, pour empêcher la fuite de l'humidité ou de la substance liquide enfermée à cet endroit et pour éviter un effet capillaire de transmission par l'élément de connexion (7).

26. Système de connexion pour conducteurs de chauffage selon la revendication 1, **caractérisé en ce que** tous les agencements de conducteur de chauffage (1, 12, 14, 14n) couplés électriquement entre eux forment une chaîne de conducteurs de chauffage, dans laquelle l'un des deux agencements de conducteur de chauffage (1, 12, 14, 14n), qui est couplé à l'extrémité de la chaîne de conducteurs de chauffage, peut être connecté à un réseau de bord interne d'un avion, qui alimente la chaîne de conducteurs de chauffage en énergie électrique.

27. Système de connexion pour conducteurs de chauffage selon les revendications 1, 3 et 4, **caractérisé en ce que** le matériau d'étanchéité (19) est un adhésif d'étanchéité qui présente non seulement des propriétés adhésives et d'étanchéité mais assure également une isolation électrique et thermique.

28. Système de connexion pour conducteurs de chauffage selon la revendication 27, **caractérisé en ce que** l'on utilise en tant qu'adhésif d'étanchéité une masse de collage/scellement qui est constituée d'un matériau à deux composants et est à base d'époxy/polyamide qui assure une coulée et un collage des zones d'installation dans l'espace intérieur (61) du boîtier de raccordement (6) et un remplissage sur tous les côtés de l'espace intérieur (61), jusqu'à la paroi intérieure (61) du boîtier de raccordement (6) de type matière plastique, sans inclusions d'air.

29. Système de connexion pour conducteurs de chauffage selon la revendication 6, **caractérisé en ce que** le boîtier de raccordement (6) est constitué d'une partie de boîtier inférieure (66), en un matériau de type matière plastique, et d'un couvercle de boîtier, en un matériau de type matière plastique, qui s'étend sur toute la longueur du module de raccordement (5) et recouvre l'espace intérieur (61) du boîtier de raccordement (66).

30. Système de connexion pour conducteurs de chauffage selon les revendications 6 et 20, **caractérisé en ce que** le couvercle du boîtier repose sur toute la longueur de l'épaisseur de paroi dégagée de la partie de boîtier inférieure (66), les trous de guidage (183) et les chambres de contact des parties de boîtier (63) pleines étant réalisés sous forme de rainures ouvertes, de sorte que les régions du couvercle de boîtier et des extrémités libres de la paroi de la partie de boîtier inférieure (66) peuvent être reliées par complémentarité de formes, par soudage.
